# EUROPEAN PATENT SPECIFICATION

(11) **EP 3 879 945 B1**
(45) Date of publication and mention of the grant of the patent: **29.04.2026**
(21) Application number: 20162321.2
(22) Date of filing: 11.03.2020
(51) Int. Cl.: H05B 47/19, H05B 47/115, H05B 47/11, F21V 23/04, H04L 12/28, H04W 4/33, G05B 15/02, H04L 67/125, H04L 67/12, H04L 12/66, G06N 20/00

(54) **SYSTEM COMPRISING A GRID OF A PLURALITY OF BUILDING TECHNOLOGY SENSOR MODULES, A GATEWAY, A DATA PROCESSING UNIT AND A CENTRAL DATABASE**
SYSTEM UMFASSEND EIN GITTER AUS EINER VIELZAHL VON GEBÄUDETECHNIK-SENSORMODULEN, EIN GATEWAY, EINE DATENVERARBEITUNGSEINHEIT UND EINE ZENTRALE DATENBANK
SYSTÈME COMPRENANT UNE GRILLE D'UNE PLURALITÉ DE MODULES DE CAPTEURS DE TECHNIQUE DU BÂTIMENT, UNE PASSERELLE, UNE UNITÉ DE TRAITEMENT DE DONNÉES ET UNE BASE DE DONNÉES CENTRALE

(43) Date of publication of application: 15.09.2021
(73) Proprietor: Tridonic GmbH & Co KG, 6851 Dornbirn (AT)
(72) Inventor: Bakk, Istvan, 6850 Dornbirn (AT)
(74) Representative: Rupp, Christian

(56) References cited:
- EP-A2- 3 499 323
- WO-A1-2019/110294
- WO-A2-2019/175435
- US-A1- 2015 181 678
- US-A1- 2015 338 077
- US-A1- 2017 103 454
- US-A1- 2017 228 874
- US-A1- 2018 375 743
- US-A1- 2019 028 195
- US-A1- 2019 214 019

## Description

### TECHNICAL FIELD OF THE INVENTION

The disclosure relates to a grid of a plurality of building technology sensor modules and a system comprising said grid of sensor modules. The disclosure further relates to a method for operating such a grid.

### BACKGROUND OF THE INVENTION

Many environments, such as buildings, comprise various sensors **e.g.** motion sensors or noise sensors, which are distributed in the environment to collect environmental information, **e.g.** information about the presence of people or a noise level in the environment. This information can be used to control a luminaire grid or other building systems. For example, US 2019/028195 A1 discloses a light system with communication capability. For example, US 2015/181678 A1 discloses a smart lighting system for controlling lighting nodes of a lighting system associated with a lighting infrastructure based on composited lighting models. For example, US 2015/338077 A1 discloses smart luminaires incorporating sensors and communicating data from those sensors with local and distributed networks. WO 2019/175435 A2 discloses luminaires equipped with various sensors and distributed processing units. US 2017/103454 A1 discloses a networked lightning system with various sensors for collecting and analyzing environmental data.

However, it is difficult and costly to distribute, network and power a sufficient number of different environmental sensors, especially in a large environment.

Thus, it is an objective of the invention to provide an improved system comprising a grid of building technology sensor modules, which avoid the above-mentioned disadvantages. In particular, it is an objective to collect environmental information efficiently and in a cost effective manner.

### SUMMARY OF THE INVENTION

The object of the present invention is achieved by the solution provided in the enclosed independent claim. Advantageous implementations of the present invention are further defined in the dependent claims. The invention is set out in the appended set of claims.

In a grid of a plurality of building technology sensor modules, each of the sensor modules comprises a light sensor, preferably a daylight sensor, an acoustic sensor, a motion sensor, a controller configured to be supplied with output signals of said sensors, and a interface, in particular a wireless interface, for a communication between the controller and a gateway for forwarding sensor information signals to a processing unit and a central database. This provides the advantage that environmental information can be collected efficiently.

Integrating various sensors in each sensor module of the grid, allows collecting a large number of sensor data of different sensor types and from various places in the environment. By evaluating this data, a lot of information about the environment can be gained, e.g. about the distribution and movement of people in the environment. At the same time, costs can be reduced by sharing the housing, communication means and/or power sources between the sensors in each module.

Preferably, the building technology sensor modules are sensor modules that are connected to a lighting control network, such as a DALI or wireless network, of a building, in particular via the interface. The sensor modules can be configured for controlling luminaires connected to the lighting control network.

Throughout the document, the phrase "sensor modules" refers to the "building technology sensor modules".

In particular, the grid comprises a plurality of luminaires, wherein each sensor module is integrated in a respective luminaire.

Since luminaires are typically evenly distributed over such an environment, integrating each sensor module in a respective luminaire leads to a good coverage of the environment with the sensors. Each sensor module of the grid is integrated in a separate luminaire. The luminaires can form a luminaire grid, wherein the grid of the plurality of building technology sensor modules can comprise the luminaire grid.

In particular, the respective sensors and the respective controller of the one, more or all sensor modules are placed on circuit boards of the luminaires, wherein preferably the circuit boards are provided with a plurality of LEDs.

This achieves the advantage that the sensors in the luminaires have a low profile and can use existing power supplies and/or communication means of the luminaires. Thus, each luminaire may simultaneously function as a sensor and a light source, which leads to an overall cost reduction.

In particular, the respective sensors and the respective controller of the one, more or all sensor modules are arranged within housings of the luminaires, preferably below diffusing plates.

This achieves the advantage that costs can be reduced by using shared housings for luminaires and sensors.

In particular, the luminaires are downlights, pending luminaires or freestanding luminaires.

This provides the advantage that the environment can be illuminated efficiently.

In particular, the respective controller is arranged for forwarding the sensor information signals repetitively with a constant or a varying, especially adaptive, frequency.

This achieves the advantage that changes in the environment over time can be observed.

Said sensor information signals comprise a timestamp, an identifier (ID) of a sensor module and a sensor value.

This achieves the advantage that each sensor information signal can be correlated to a place in the environment and a time. For instance, this enables determining at which time people are present in a certain place in the environment, e.g. a certain room.

In particular, sensor information signals comprise a plurality of timestamps, identifiers (ID) of sensor modules and sensor values.

The sensor value represents a parameter value, preferably an amplitude, of the output signal at the time of the associated timestamp.

This achieves the advantage that sensor values that are sufficient to detect changes in the environment can be forwarded to the database. In particular, only isolated sensor values, e.g. a noise level every few seconds, but no direct voice or video recordings are forwarded by the sensor modules due to hardware restrictions in the sensor modules.

In particular, the sensor information signals are forwarded using a communication protocol, preferably the Bluetooth standard, the ZigBee standard or the Thread standard.

According to a first aspect, the invention relates to a system comprising the above-mentioned grid of building technology sensor modules, the gateway, preferably the wireless gateway, the data processing unit and the central database.

This provides the advantage that environmental information can be collected and stored efficiently.

The data processing unit and the central database carry out a first data analysis of the forwarded sensor information signals, preferably by machine learning, for evaluating correlations between the sensor information signals of sensors of different sensor modules.

This sensor fusion, i.e. the combination and comparison of different types of sensor signals from different sensors, allows determining additional information about the environment with low uncertainty.

The data processing unit and the central database carry out a second data analysis of the forwarded sensor information signals for evaluating the time development of one or more sensor information signals.

This achieves the advantage that additional information about the environment, e.g. movement patterns within the environment or typical times at which people are present in certain areas, can be determined based on sensor information signals.

In an embodiment, the system is designed to adapt an operation parameter of the system depending on the results of the first and/or second data analysis.

This achieves the advantage that the system has a high robustness, e.g. faulty sensor signals can be detected via comparison with signals from other sensors.

For instance, the frequency at which certain sensor modules are forwarding the sensor information signals can be adapted based on the results of the first and/or second data analysis.

In an embodiment, the system is designed to detect incorrect data provided by one or more sensors based on the first and/or second data analysis, and to ignore, replace or correct such incorrect data.

This achieves the advantage that the system has a high robustness.

In an embodiment, the system is designed to provide data of the system, in particular results of the first and/or second data analysis, to an external system, e.g. a building management system, a HVAC system, other a non-lighting system.

This achieves the advantage that external systems can be controlled efficiently based on the measurements of the sensor modules.

When the system comprises the central database, the central database can comprise a local storage, which is arranged in the environment of the grid, preferably in a building, and/or a remote storage, e.g. a cache server or a cloud storage. In particular, the local storage can collect the sensor information signals in real time locally.

### BRIEF DESCRIPTION OF THE DRAWINGS

The invention will be explained in the followings together with the figures.
- Fig. 1: shows a schematic diagram of a grid of a plurality of building technology sensor modules;
- Fig. 2: shows a schematic diagram of a luminaire;
- Fig. 3: shows a schematic diagram of a luminaire;
- Fig. 4: shows a schematic diagram of a system comprising a grid of building technology sensor modules according to an embodiment;
- Fig. 5: shows a schematic diagram of a system comprising a grid of building technology sensor modules according to a further embodiment; and
- Fig. 6: shows a schematic diagram of a method for operating a grid of a plurality of building technology sensor modules of a system comprising the grid.

### DETAILED DESCRIPTION OF THE PREFERRED EMBODIMENTS

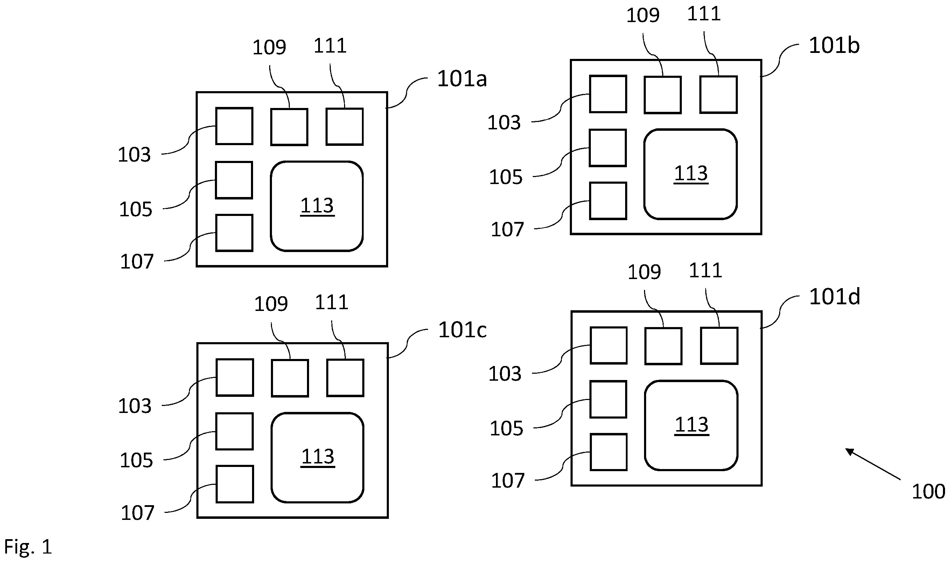

Fig. 1 shows a schematic diagram of a grid 100 of a plurality of building technology sensor modules 101a-d.

Each of the building technology sensor modules 101a-d in the grid 100 comprises a light sensor 103, preferably a daylight sensor, an acoustic sensor 105, a motion sensor 107, a controller 109 supplied with the output signals of said sensors 103, 105, 107, and an interface 111 for a communication between the controller 109 and a gateway for forwarding sensor information signals to a processing unit and/or a central database (not shown in Fig. 1).

The grid 100 can be arranged in an environment, in particular a building.

Preferably, the interface 111 is configured to communicate with the gateway, in particular to forward the sensor information signals to the gateway. The interface 111 can be a wireless interface. Likewise, the gateway can be a wireless gateway.

The grid 100 can comprise luminaires, wherein the sensor modules 101a-d of the grid 100 can be integrated in or associated with the luminaires. Therefore, in the exemplary example of Fig. 1, each sensor module 101a-d comprises a light source 113.

Since luminaires 101a-d are typically evenly distributed over an environment, equipping or associating each luminaires of a grid of luminaires with a sensor modules 101a-d leads to a good coverage of the environment with the sensors. Equipping luminaires with sensors has the additional advantage that no extra planning or manual commissioning for mounting external sensors in the environment has to be done.

Each of the luminaires can be a downlight luminaire, a standing luminaire or a freestanding luminaire. In particular, the grid 100 comprises different types of luminaires at different locations in the environment.

The controller 109 of each sensor module can be a micro controller unit (MCU).

Preferably, the controller 109 of each sensor module 101a-d is arranged for forwarding the sensor information signals repetitively with a constant or a varying, especially adaptive, frequency. In particular, the controller is configured to control the wireless interface 111 to forward the sensor information signals.

Preferably, the interface 111 of each sensor module 101a-d comprises a Bluetooth interface, a ZigBee interface and/or a Thread interface. The sensor information signals can be forwarded by the wireless interface 111 using the Bluetooth standard, the ZigBee and/or the Thread standard. In this way, the emitted sensor information signals can be received with a device, **e.g.** a smartphone, which can act as a gateway device.

The sensor information signals can comprise a timestamp, an identifier (ID) of the respective sensor module 101a-d and a sensor value. Via the timestamp and the identifier, the sensor value can be correlated to a place and time in the environment. In this way, a 2D mapping of the sensor values, e.g. anisotropic analog data, can be generated based on data stored in the central database. For instance, the 2D mapping shows a noise level or a brightness in the environment at different times during the day.

The acoustic sensor 105 of each sensor module 101a-d can be a noise detector. In particular, the acoustic sensor 105 is configured to detect a noise pressure level and/or noise patterns such as voice or burst sounds.

The motion sensor 107 can be a Doppler based motion sensor, i.e. a sensor that detects motion based on the Doppler effect.

The daylight sensor 103 can be configured to detect a natural light intensity, e.g. of sunlight.

Preferably, the sensor value represents the amplitude of the sensor value at the time of the associated timestamp. For instance, the acoustic sensor periodically, e.g. every 5 seconds, provides the amplitude of a sound level, which can be used to determine if people are present in a certain room.

The grid 100 can comprise multiple sensor modules 101a-d equipped with the same type and number of sensors.

Alternatively, sensor modules 101a-d of one grid 100 may comprise different sensors.

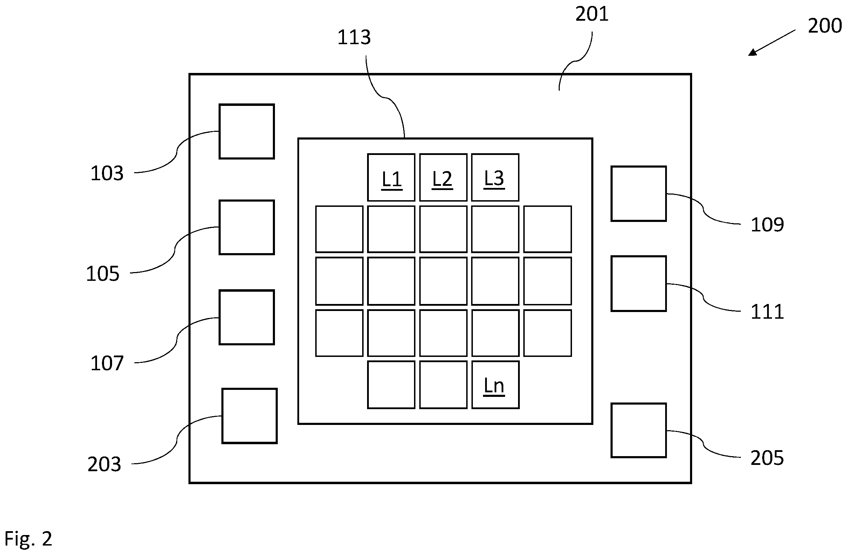

Fig. 2 shows a schematic diagram of a luminaire 200. In particular, Fig. 2 shows an exemplary luminaire 200 with an integrated sensor module 101a-d.

The luminaire 200, as shown in Fig. 2, comprises the light sensor 103, the acoustic sensor 105, the motion sensor 107, the controller 109 and the wireless interface 111 of a sensor module 101a-d of the grid 100.

The luminaire 200 further comprises a light source 113 in the form of an LED array comprises a plurality of individual LEDs L1,...,Ln. For instance, the LED array comprises 60 LEDs providing a total illumination of 2200 lm.

The luminaire 200, as shown in Fig. 2, further comprises a circuit board 201, e.g. a PCT board. The sensors 103, 105, 107 and the controller 109 can be placed on the circuit board. Preferably, as shown in Fig. 2, also the light source 113 and the wireless interface 111 is placed on the circuit board.

Preferably, the sensors 103, 105, 107 and the controller 109 are arranged within a housing (not shown) of the luminaire 200, e.g. below a diffusing plate. In this way, the sensors are not protruding the visible interface and do not disturb the appearance of the luminaire.

The luminaire 200 can further comprise a power supply 203, in particular a low voltage power supply (LVPS), which is arranged to provide a power supply to the light source 113, the sensors 103, 105, 107, the controller 109 and/or the wireless interface 111.

The luminaire 200 in Fig. 2 further comprises a driver 205, in particular a driver on board (DOB) for the light source 113.

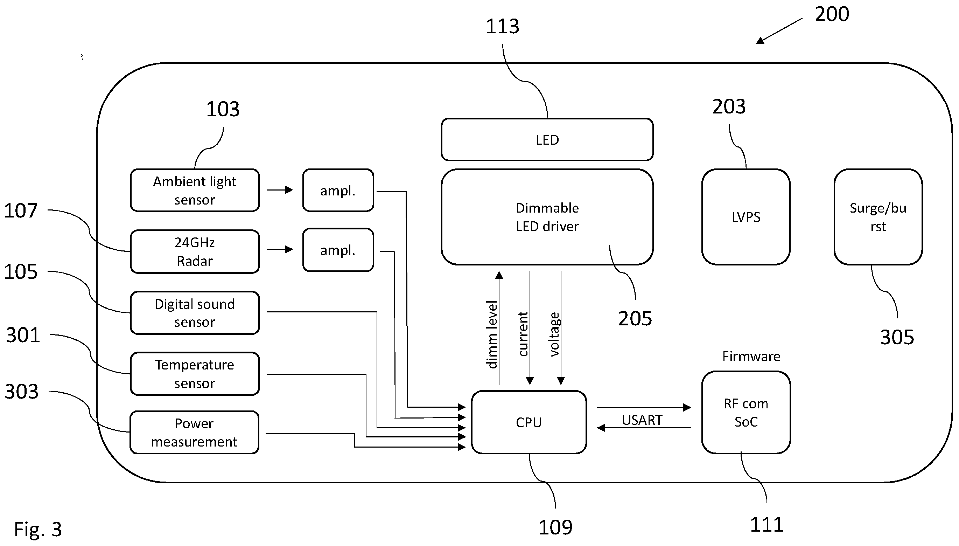

Fig. 3 shows a schematic diagram of the luminaire 200. In particular, Fig. 3 shows a further exemplary luminaire 200 with an integrated sensor module 101a-d.

The luminaire 200, as shown in Fig. 3, comprises the light sensor 103, the motion sensor 107 in form of a 24 GHz radar sensor and the acoustic sensor 105 in form of a digital sound sensor.

The luminaire 200 further comprises a temperature sensor 301 and a power measurement unit 303, e.g. for measuring a power consumption by the luminaire 200.

Furthermore, the luminaire 200 can comprises a vibration sensor (not shown), e.g. for detecting vibrations in the ceiling.

Preferably, the sensors 103, 105, 107, 301 and 303 are configured to forward sensor values to the controller 109. In Fig. 3, the controller comprises a CPU.

The sensor values can comprise amplitudes of a detected signals, for instance, a brightness value detected by the light sensor 103 or a velocity of a movement detected by the motion sensor.

The luminaire 200, as shown in Fig. 3 comprises a dimmable LED driver 205 connected to the light source 113, wherein the light source 113 comprises LEDs. The controller 109 can be configured to control a dim level of the light source 113. The controller 109 can further be configured to receive information on a current voltage or current consumption of the LEDs.

The wireless interface 111 can be configured to communicate with the controller 109 via the USART (Universal Synchronous/Asynchronous Receiver Transmitter) protocol.

The wireless interface 111 can be integrated in the luminaire 200 as a system on a chip (SoC).

The luminaire can further comprise a surge/burst protection unit 305.

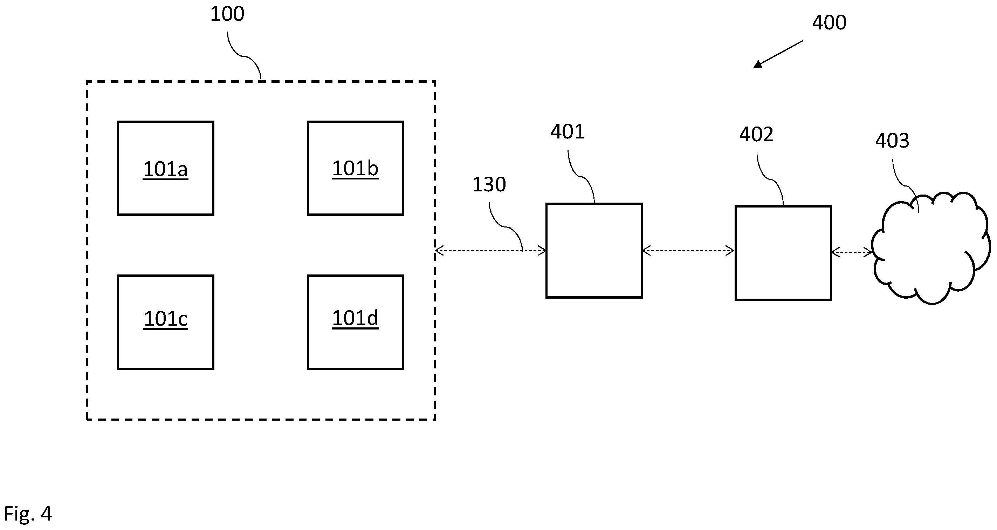

Fig. 4 shows a schematic diagram of a system 400 comprising the grid 100 of sensor modules 101a-d according to an embodiment. In particular, the grid 100 of the system 400 shown in Fig. 4 corresponds to the grid 100 shown in Fig. 1.

The system 400 further comprises the gateway 401, the data processing unit 402 and the central database 403.

The system 400 can further comprise a plurality of luminaires, in particular a luminaire grid, wherein each of the plurality of luminaires comprises a sensor module 101a-d of the grid 100.

Preferably, the interface 111 of each one of the sensor modules 101a-d in the grid 100 is configured to forward sensor information signals from the sensors 103, 105, 107 of the respective sensor module 101a-d to the gateway 401.

The gateway 401 can be configured to forward the sensor information signals to the central database 403. Preferably, the gateway is a wireless gateway.

The data processing unit 402 can be a computer.

The central database 403 can be a memory of the data-processing unit or of another device. Alternatively, the central database 403 can be a cloud storage.

Preferably, the central database 403, in particular the sensor information signals stored in the central database 403, can be analyzed for evaluating the time development of one or more sensor information signals, in particular by the data processing unit.

The data processing unit 402 and the central database 403 carry out a first data analysis, preferably by machine learning, for evaluating correlations between sensor information signals 130 of sensors 103, 105, 107 of different sensor modules 101a-d.

Further, the data processing unit 402 and/or the central database 403 can carry out a second data analysis for evaluating the time development of one or more sensor information signals 130.

In particular, the central database 403 can be analyzed, preferably by the processing unit 402, for evaluating the correlations between sensor information signals of sensors 103, 105, 107 of different categories and/or different luminaires and/or for evaluating the time development of the one or more sensor information signals 130.

The system 400 is designed to adapt an operation parameter of the system 400 depending on the results of the first and/or second data analysis.

For instance, the system 400 is designed to detect incorrect data provided by one or more sensors 103, 105, 107 based on the first and/or second data analysis, and to ignore, replace or correct such incorrect data.

The system 400 can further be designed to provide data of the system 400, in particular results of the first and/or second data analysis, to an external system, e.g. a building management system, a HVAC system, other a non-lighting system.

For instance, the system provides a presence function to an alarm system. The system can further provide an evaluation of a flow of people in the environment, e.g. in a shopping center. The system 400 could also be used for traffic monitoring, e.g. accident detection or adaptive control of traffic lights.

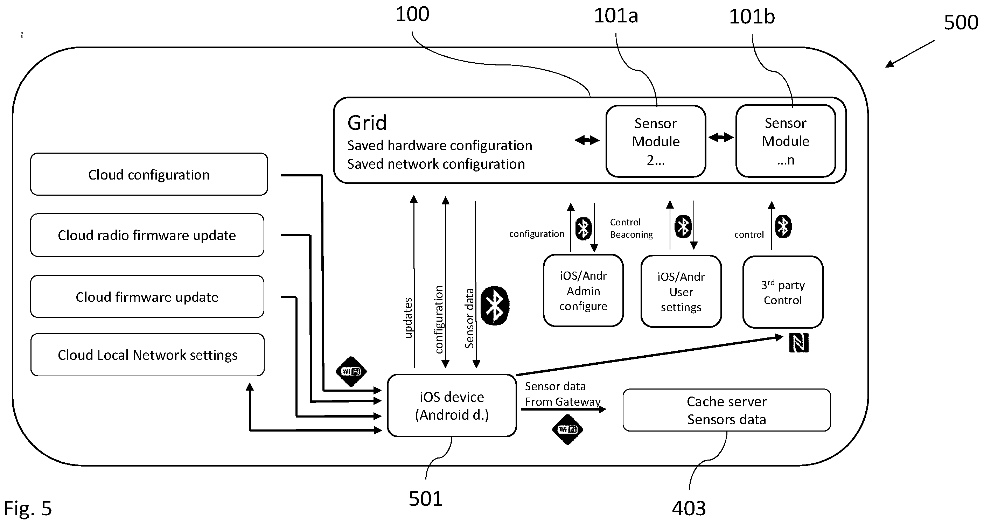

Fig. 5 shows a schematic diagram of a system 500 comprising the grid 100 of building technology sensor modules 101a-b according to a further embodiment. In particular, the system 500 shown in Fig. 5 corresponds to the system 400 shown in Fig. 4.

The system 500 shown in Fig. 5 comprises the grid 100, the central database 403 and a communication device 501, in particular a smartphone. The communication device 501 can be configured to establish a communication connection, in particular a Bluetooth connection, with the wireless interfaces 111 of the sensor modules 101a-d of the grid 100.

The grid 100 can be configured to receive update data, such as cloud (radio) firmware updates, and/or configuration data, such as user settings or local network settings, from the communication device 501.

The grid 100 can further be configured to forward configuration and/or sensor data to the communication device 501. The communication device 501 can be configured to forward this data, in particular the sensor data, to the central database 403, e.g. a cache server.

In a preferred embodiment, the communication device 501 may be configured to forward the configuration and/or sensor data to the wireless gateway 401. In an alternative embodiment, the communication device 501 may correspond to the wireless gateway 401.

The communication device 501 can be configured to initially receive the configuration and update data from an external source, e.g. via a WiFi connection.

The communication device 501 can further be configured to initiate a third parity control of the grid 100, e.g. by providing a third party device with necessary credentials via NFC.

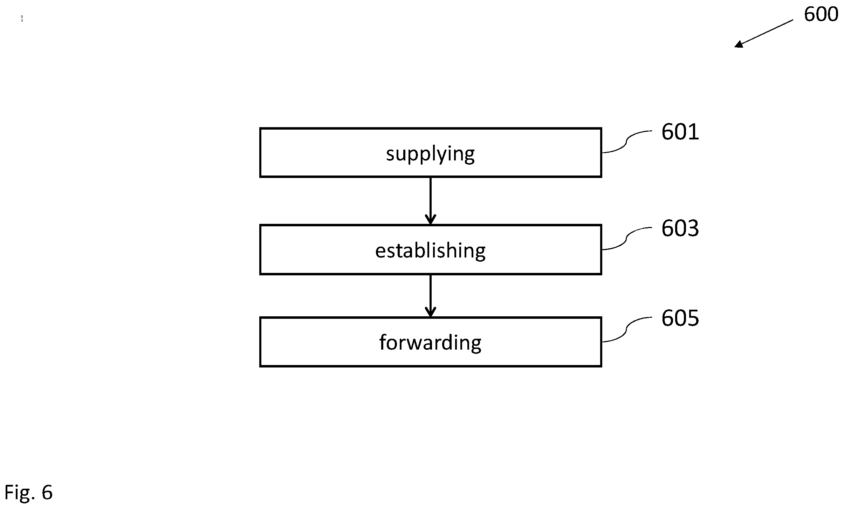

Fig. 6 shows a schematic diagram of a method 600 for operating a grid of a plurality of building technology sensor modules 101a-d of a system comprising the grid.

In particular, the building technology sensor modules 101a-d correspond to the sensor modules 101a-d as depicted in Fig. 1. Each sensor module 101a-d comprises a light sensor 103, preferably a daylight sensor, an acoustic sensor 105, and a motion sensor (107)

The method 600 particularly comprises the steps of:
- supplying 601 output signals of said sensors 103, 105, 107 to the controller 109,
- establishing 603 a communication connection between the controller 109 and the gateway 401, and
- forwarding sensor information signals (130) to the data processing unit 402 and/or the central database 403 by means of the gateway 401.

All features of all embodiments described, shown and/or claimed herein can be combined with each other.

While various embodiments of the present invention have been described above, it should be understood that they have been presented by way of example only and not limitation. Thus, the breadth and scope of the present invention should not be limited by any of the above-described embodiments. Rather, the scope of the invention should be defined in accordance with the following claims and their equivalence.

## Claims

1. A system (400), comprising
a grid (100) of a plurality of building technology sensor modules (101a-d), each of the building technology sensor modules (101a-d) comprising:
a light sensor (103), preferably a daylight sensor,
an acoustic sensor (105),
a motion sensor (107),
a controller (109) configured to be supplied with output signals of said sensors (103, 105, 107), and
an interface, preferably a wireless interface (111) for a communication between the controller (109) and a gateway (401) for forwarding sensor information signals (130) to a data processing unit (402) and a central database (403), wherein the sensor information signals (130) comprise a timestamp, an identifier of a building technology sensor module (101a-d) and a sensor value, and wherein the sensor value represents a parameter value, preferably an amplitude, of the output signal of the respective sensors (103, 105, 107) at the time of the associated timestamp, wherein the system further comprises:
- the gateway (401), and
- the data processing unit (402) and the central database (403),
wherein the data processing unit (402) and the central database (403) carry out a first data analysis of the forwarded sensor information signals (130), preferably by machine learning, for evaluating correlations between sensor information signals (130) of sensors (103, 105, 107) of different building technology sensor modules (101a-d), the grid (100) comprising a plurality of luminaires (200), wherein each of the building technology sensor modules (101a-d) is integrated in a respective luminaire (200).

2. The system (400) of claim 1, wherein the data processing unit (402) and the central database (403) carry out a second data analysis of the forwarded sensor information signals (130) for evaluating the time development of one or more sensor information signals (130).

3. The system (400) of claim 2, wherein the system (400) is designed to adapt an operation parameter of the system (400) depending on the results of the first and/or second data analysis.

4. The system (400) of claim 2 or 3, wherein the system (400) is designed to provide data of the system (400), in particular results of the first and/or second data analysis, to an external system, e.g. a building management system, a HVAC system, other a non-lighting system.

5. The system (400) of any one of claims 1 to 4, wherein when the system (400) comprises the central database (403), the central database (403) comprises a local storage, which is arranged in an environment of the grid (100) and/or a remote storage, e.g. a cache server or a cloud storage.

6. The system (400) of any one of the preceding claims, wherein the respective sensors (103, 105, 107) and the respective controller (109) of the building technology sensor modules are placed on a circuit board (201) of the respective luminaire (200), wherein preferably the circuit board (201) are provided with a plurality of LEDs (113, L1,...,Ln).

7. The system (400) of any one of the preceding claims, wherein the respective sensors (103, 105, 107) and the respective controller (109) of the building technology sensor modules are arranged within a housing of the respective luminaire (200), preferably below diffusing plates.

8. The system (400) of any one of the preceding claims, wherein the luminaires (200) are downlights, pending luminaires and/or a freestanding luminaires.

9. The system (400) of any of the preceding claims, wherein the respective controller (109) is arranged for forwarding the sensor information signals (130) repetitively with a constant or a varying, especially adaptive, frequency.

10. The system (400) of any of the preceding claims, wherein said sensor information signals (130) are forwarded using a communication protocol, preferably the Bluetooth standard, the ZigBee standard or the Thread standard.

## Patentansprüche

1. System (400), aufweisend:
- ein Netz (100) aus einer Mehrzahl von gebäudetechnischen Sensormodulen (101a-d), wobei jedes der gebäudetechnischen Sensormodule (101a-d) Folgendes umfasst: einen Lichtsensor (103), vorzugsweise einen Tageslichtsensor, einen akustischen Sensor (105), einen Bewegungssensor (107), eine Steuereinheit (109), die konfiguriert ist, mit den Ausgangssignalen der genannten Sensoren (103, 105, 107) versorgt zu werden, und eine Schnittstelle, vorzugsweise eine drahtlose Schnittstelle (111), für eine Kommunikation zwischen der Steuereinheit (109) und einer Gateway (401) zum Weiterleiten von Sensorinformationssignalen (130) an eine Datenverarbeitungseinheit (402) und eine zentrale Datenbank (403), wobei die Sensorinformationssignale (130) einen Zeitstempel, eine Kennung eines gebäudetechnischen Sensormoduls (101a-d) und einen Sensorwert umfassen und der Sensorwert einen Parameterwert - vorzugsweise eine Amplitude - des Ausgangssignals der jeweiligen Sensoren (103, 105, 107) zum Zeitpunkt des zugehörigen Zeitstempels darstellt;
- ein Gateway (401); und
- eine Datenverarbeitungseinheit (402) und eine zentrale Datenbank (403);
- wobei die Datenverarbeitungseinheit (402) und die zentrale Datenbank (403) eine erste Datenanalyse der weitergeleiteten Sensorinformationssignale (130) durchführen, vorzugsweise mittels maschinellen Lernens, um Korrelationen zwischen Sensorinformationssignalen (130) von Sensoren (103, 105, 107) verschiedener gebäudetechnischer Sensormodule (101a-d) auszuwerten;
- wobei das Netz (100) eine Mehrzahl von Leuchten (200) umfasst und jedes der gebäudetechnischen Sensormodule (101a-d) in einer jeweiligen Leuchte (200) integriert ist.

2. System (400) nach Anspruch 1, wobei die Datenverarbeitungseinheit (402) und die zentrale Datenbank (403) eine zweite Datenanalyse der weitergeleiteten Sensorinformationssignale (130) durchführen, um die zeitliche Entwicklung eines oder mehrerer der Sensorinformationssignale (130) auszuwerten.

3. System (400) nach Anspruch 2, wobei das System (400) dazu ausgelegt ist, einen Betriebsparameter des Systems (400) in Abhängigkeit von den Ergebnissen der ersten und/oder zweiten Datenanalyse anzupassen.

4. System (400) nach Anspruch 2 oder 3, wobei das System (400) dazu ausgelegt ist, Systemdaten, insbesondere Ergebnisse der ersten und/oder zweiten Datenanalyse, einem externen System bereitzustellen, beispielsweise einem GebäudeManagement-System, einem HLK-System oder einem anderen nichtbeleuchtungstechnischen System.

5. System (400) nach einem der Ansprüche 1 bis 4, wobei - falls das System (400) die zentrale Datenbank (403) umfasst - die zentrale Datenbank (403) einen lokalen Speicher umfasst, der in einer Umgebung des Netzes (100) angeordnet ist, und/oder einen entfernten Speicher, beispielsweise einen Pufferserver oder einen Cloud-Speicher.

6. System (400) nach einem der vorhergehenden Ansprüche, wobei die jeweiligen Sensoren (103, 105, 107) und die jeweilige Steuereinheit (109) der gebäudetechnischen Sensormodule auf einer Leiterplatte (201) der jeweiligen Leuchte (200) angeordnet sind, wobei vorzugsweise die Leiterplatte (201) mit einer Mehrzahl von LEDs (113, L1, ..., Ln) ausgestattet ist.

7. System (400) nach einem der vorhergehenden Ansprüche, wobei die jeweiligen Sensoren (103, 105, 107) und die jeweilige Steuereinheit (109) der gebäudetechnischen Sensormodule innerhalb eines Gehäuses der jeweiligen Leuchte (200) angeordnet sind, vorzugsweise unterhalb von Diffusorplatten.

8. System (400) nach einem der vorhergehenden Ansprüche, wobei die Leuchten (200) Einbaustrahler, Pendelleuchten und/oder freistehende Leuchten sind.

9. System (400) nach einem der vorhergehenden Ansprüche, wobei die jeweilige Steuereinheit (109) dazu eingerichtet ist, die Sensorinformationssignale (130) wiederholt mit einer konstanten oder einer variierenden, insbesondere adaptiven, Frequenz weiterzuleiten.

10. System (400) nach einem der vorhergehenden Ansprüche, wobei die Sensorinformationssignale (130) über ein Kommunikationsprotokoll weitergeleitet werden, vorzugsweise nach dem Bluetooth-Standard, dem ZigBee-Standard oder dem Thread-Standard.

## Revendications

1. Système (400) comprenant:
- une grille (100) d'une pluralité de modules capteurs de technologie du bâtiment (101a-d), chacun desdits modules comprenant un capteur de lumière (103), de préférence un capteur de lumière du jour, un capteur acoustique (105), un capteur de mouvement (107), un circuit de commande (109) configuré pour recevoir les signaux de sortie desdits capteurs (103, 105, 107), et une interface, de préférence une interface sans fil (111), permettant une communication entre le circuit de commande (109) et une passerelle (401) afin de transmettre des signaux d'information de capteur (130) à une unité de traitement de données (402) et à une base de données centrale (403), lesdits signaux d'information de capteur (130) comprenant un horodatage, un identifiant d'un module capteur de technologie du bâtiment (101a-d) et une valeur de capteur, ladite valeur de capteur représentant une valeur de paramètre, de préférence une amplitude, du signal de sortie des capteurs (103, 105, 107) au moment de l'horodatage associé ;
- la passerelle (401) ; et
- l'unité de traitement de données (402) et la base de données centrale (403) ;
- dans lequel l'unité de traitement de données (402) et la base de données centrale (403) réalisent une première analyse des signaux d'information de capteur (130) transmis, de préférence par apprentissage automatique, afin d'évaluer des corrélations entre les signaux d'information de capteur (130) de capteurs (103, 105, 107) de différents modules capteurs de technologie du bâtiment (101a-d) ;
- la grille (100) comprend une pluralité de luminaires (200), chaque module capteur de technologie du bâtiment (101a-d) étant intégré dans un luminaire (200) respectif.

2. Système (400) selon la revendication 1, dans lequel l'unité de traitement de données (402) et la base de données centrale (403) effectuent une deuxième analyse des signaux d'information de capteur (130) transmis afin d'évaluer l'évolution temporelle d'un ou de plusieurs desdits signaux d'information de capteur (130).

3. Système (400) selon la revendication 2, dans lequel le système (400) est conçu pour adapter un paramètre de fonctionnement du système (400) en fonction des résultats de la première et/ou de la deuxième analyse de données.

4. Système (400) selon la revendication 2 ou 3, dans lequel le système (400) est conçu pour fournir des données du système (400), en particulier des résultats de la première et/ou de la deuxième analyse de données, à un système externe, par exemple un système de gestion de bâtiment, un système CVC ou un autre système non lié à l'éclairage.

5. Système (400) selon l'une quelconque des revendications 1 à 4, dans lequel, lorsque le système (400) comprend la base de données centrale (403), ladite base de données centrale (403) comprend une mémoire locale disposée dans l'environnement de la grille (100) et/ou une mémoire distante, par exemple un serveur cache ou un stockage en nuage.

6. Système (400) selon l'une quelconque des revendications précédentes, dans lequel les capteurs (103, 105, 107) et le circuit de commande (109) des modules capteurs de technologie du bâtiment sont disposés sur une carte de circuit imprimé (201) du luminaire (200) respectif, ladite carte de circuit imprimé (201) étant de préférence équipée d'une pluralité de LED (113, L1, ..., Ln).

7. Système (400) selon l'une quelconque des revendications précédentes, dans lequel les capteurs (103, 105, 107) et le circuit de commande (109) des modules capteurs de technologie du bâtiment sont agencés à l'intérieur d'un boîtier du luminaire (200) respectif, de préférence en dessous de plaques de diffusion.

8. Système (400) selon l'une quelconque des revendications précédentes, dans lequel les luminaires (200) sont des downlights, des luminaires suspendus et/ou des luminaires sur pied.

9. Système (400) selon l'une quelconque des revendications précédentes, dans lequel le circuit de commande (109) respectif est agencé de manière à retransmettre de façon répétée les signaux d'information de capteur (130) avec une fréquence constante ou variable, en particulier adaptative.

10. Système (400) selon l'une quelconque des revendications précédentes, dans lequel les signaux d'information de capteur (130) sont transmis au moyen d'un protocole de communication, de préférence selon la norme Bluetooth, la norme ZigBee ou la norme Thread.
